Europäisches Patentamt

European Patent Office

Office européen des brevets

(11) Publication number: **0 512 531 A2**

## EUROPEAN PATENT APPLICATION

(21) Application number: 92107689.9

(51) Int. Cl.5: **H02M 7/527**, B60L 9/22

(22) Date of filing: 07.05.92

(30) Priority: **09.05.91 JP 104114/91**

(43) Date of publication of application:
**11.11.92 Bulletin 92/46**

(84) Designated Contracting States:
**CH DE FR IT LI**

(71) Applicant: **HITACHI, LTD.**
**6, Kanda Surugadai 4-chome**
**Chiyoda-ku, Tokyo 101(JP)**
Applicant: **HITACHI TECHNO ENGINEERING**
**CO., LTD.**
**No. 3, Kandasurugadai 4-chome**
**Chiyoda-ku Tokyo(JP)**

(72) Inventor: **Matsui, Takayuki**
**3-18-5, Daihara-cho**
**Hitachi-shi, Ibaraki 316(JP)**
Inventor: **Horie, Akira**
**2915-16, Mawatari**
**Katsuta-shi, Ibaraki 312(JP)**
Inventor: **Kawakami, Tetsuya**
**314 Daiichi-Yuwa-ryo, 21-1, Ishikawa-cho**
**Katsuta-shi, Ibaraki 312(JP)**
Inventor: **Saitoh, Syuuji**
**2135-43, Tsuda**
**Katsuta-shi, Ibaraki 312(JP)**

Inventor: **Toyota, Eiichi**
**1432-5, Tabiko**
**Katsuta-shi, Ibaraki 312(JP)**
Inventor: **Sakata,Kazuhiro**
**1381-18, Tabiko**
**Katsuta-shi, Ibaraki 312(JP)**
Inventor: **Tsuboi,Takashi**
**897-13, Ichige**
**Katsuta-shi, Ibaraki 312(JP)**
Inventor: **Nakamura, Kiyoshi**
**2525-524, Mawatari**
**Katsuta-shi, Ibaraki 312(JP)**
Inventor: **Nakata, Kiyoshi**
**626-4, Kuwada, Iwase-machi**
**Nishiibaraki-gun, Ibaraki 309-12(JP)**
Inventor: **Tsutsui, Yoshio**
**12-1-305, Aoba-cho**
**Katsuta-shi, Ibaraki 312(JP)**
Inventor: **Tanamachi, Tokunosuke**
**3600-455, Nakane**
**Katsuta-shi, Ibaraki 312(JP)**

(74) Representative: **Patentanwälte Beetz - Timpe -**
**Siegfried - Schmitt-Fumian- Mayr**
**Steinsdorfstrasse 10**
**W-8000 München 22(DE)**

(54) **Inverter arrangement and AC motor driving system.**

(57) In a multi series pulse width modulation inverter arrangement, an inverter arrangement which can continue the inverter operation, in particular, by preventing an overcurrent caused by an erroneous firing of a switching element therein is provided. The multi series inverter arrangement is constituted to be operative in three level mode and in two level mode. Even when an erroneous firing thereof due to noise is generated, the operation of the inverter unit (4) can be continued, the overcurrent due to the erroneous firing is eliminated, the present inverter arrangement can be used under a severe noise environment and outputs an AC output having a small amount of higher harmonics, moreover when the inverter arrangement is operating under a three level mode in a low efficiency region, the operating mode of the inverter arrangement is positively switched from the three level mode to the two level mode, thereby the operating efficiency of the inverter arrangement is enhanced.

# FIG. 1

MULTI SERIES INVERTER UNIT

DISPLAY

FILTER

PWM SIGNAL CALCULATOR

CURRENT DETECTOR

SPEED CALCULATION

VOLTAGE COMMAND CALCULATOR

DURING NORMAL LEVEL SWITCHING BETWEEN 3 AND 2

IM

$V_{up}$  $V_{vp}$  $V_{wp}$

$I_m$

$f_r$

$f_1$

$f_s$

$\Delta f_s$

$f_{sp}$

$\Delta I$

$I_p$

$S_c$

Background of the Invention

The present invention relates to a multi series pulse width modulation (PWM) inverter arrangement and to an electric rolling stock driving system using such inverter arrangement.

For the revolution speed control of AC motors, PWM inverter arrangements are commonly used, however the phase voltage at the AC output side of the PWM inverter unit takes two levels of positive and negative such that there arises a problem that a large amount of higher harmonic components is contained in the output current at the AC side.

In order to reduce the higher harmonic components contained in the output current from the PWM inverter unit, for example, JP-A-56-74088 (1981) proposes to multiply the PWM inverter unit in series and to output a phase voltage from the AC output side of the inverter unit in three levels of positive, zero and negative.

With the above conventional PWM inverter unit, when an erroneous firing of a switching element therein occurs such as by noises, the smoothing capacitor therein is possibly short-circuited, and thereby switching elements therein are likely to be broken down, however in the conventional PWM inverter unit no special measures to protect the switching elements from the overcurrent are taken.

Further, when such PWM inverter unit is used in an AC motor control device such as for an electric rolling stock, it is not always efficient to take the three level phase voltages of positive, zero and negative from the AC output side of the inverter unit in view of the voltage utilization rate.

Summary of the Invention

An object of the present invention is to provide an inverter arrangement which enables to continue the operation of the inverter unit even if failures due to such as erroneous firing of a switching element in the inverter unit occur.

Another object of the present invention is to provide an inverter arrangement which eliminates the overcurrent due to the erroneous firing, enables to be used under a severe noise environment and outputs an AC output current containing a small amount of higher harmonics.

A further object of the present invention is to provide an inverter arrangement making use of multi series inverter unit which operates an AC motor control device with a good efficiency.

The above objects of the present invention are achieved by providing an inverter arrangement, which inverts a DC to an AC, with means for switching between a first mode having an AC phase voltage of three levels and a second mode having an AC phase voltage of two levels each other.

With the above constitution, the above objects of the present invention are achieved through the following operation.

The conditions in which a smoothing capacitor is short-circuited and the overcurrent flows therethrough due to an erroneous firing of a switching element in the multi series inverter units are those when a switching mode rendering the phase voltage of the AC output side positive overlaps with a switching mode rendering the phase voltage thereof zero and when a switching mode rendering the phase voltage of the AC output side negative overlaps with a switching mode rendering the phase voltage thereof zero. When the smoothing capacitor is short-circuited due to an erroneous firing of a switching element under one of the above conditions, the inverter units can not output an AC current. In order to continue the operation of the inverter arrangement in such instance, the multi series inverter units are to be operated like the conventional PWM inverter unit having two output phase voltage levels of positive and negative while eliminating the switching mode rendering the output phase voltage level zero. As a result, even if an erroneous firing of a switching element is generated due to noises, the overcurrent due to the erroneous firing is eliminated and the operation of the inverter unit is continued because of no simulaneous existence of the switching mode rendering the output phase voltage zero and the other switching modes, thereby an inverter arrangement which can be used under a severe noise environment and which outputs an AC current containing a small amount of higher harmonics is provided.

On the other hand, under a normal operating condition a current flows through the neutral point of the DC circuit in the multi series inverter unit when the output voltages of the respective phases are at zero level. The interval when the output voltage level is zero decreases dependent upon the increase of the output voltage of the inverter unit. Accordingly, an operating region in which the interval of the zero voltage level decreases is estimated by means of the magnitude of the output voltage and during the operating region in which the interval of zero voltage level in the output voltage decreases the multi series inverter unit is operated like the conventional PWM inverter unit having two output phase levels of positive and negative. As a result, the operating efficiency of the inverter arrangement is enhanced.

Brief Explanation of the Drawings

Fig.1 is a control block diagram showing one embodiment according to the present invention which is applied to an electric rolling stock ;

Fig.2 is a constitutional diagram showing a main circuit of the multi series inverter unit in the one embodiment according to the present invention ;

Fig.3 is circuit diagrams illustrating an overcurrent generation due to an erroneous firing of a switching element in the main circuit ;

Fig.4 is waveforms for explaining the operating principle of the present invention ;

Fig.5 is a control block diagram showing another embodiment of the during failure level switching unit 5 between three and two level modes in the one embodiment according to the present invention ;

Fig.6 is a control block diagram showing another embodiment of the during normal level switching unit 6 between three and two level modes in the one embodiment according to the present invention ;

Fig.7 is a characteristic diagram for explaining a relationship between inverter output voltage and interval of zero phase voltage of the inverter ;

Fig.8 is a detailed circuit diagram of a PWM signal calculating unit 18 in the one embodiment according to present invention ;

Fig.9 is a constitutional diagram showing another main circuit of the multi series inverter unit in the one embodiment according to the present invention ;

Fig.10 is a space vector diagram representing output voltages of the multi series inverter unit in the one embodiment according to the present invention ;

Fig.11 is constitutional diagram of interrupting circuits 18 applicable for the main circuits of the multi series inverter unit in the one embodiment according to the present invention ;

Fig.12 is a circuit diagrams of another PWM signal calculating unit 18 in the one embodiment according to the present invention ; and

Fig. 13 is a flow chart showing the processing in the other PWM signal calculating unit 18.

Detailed Description of the Embodiments

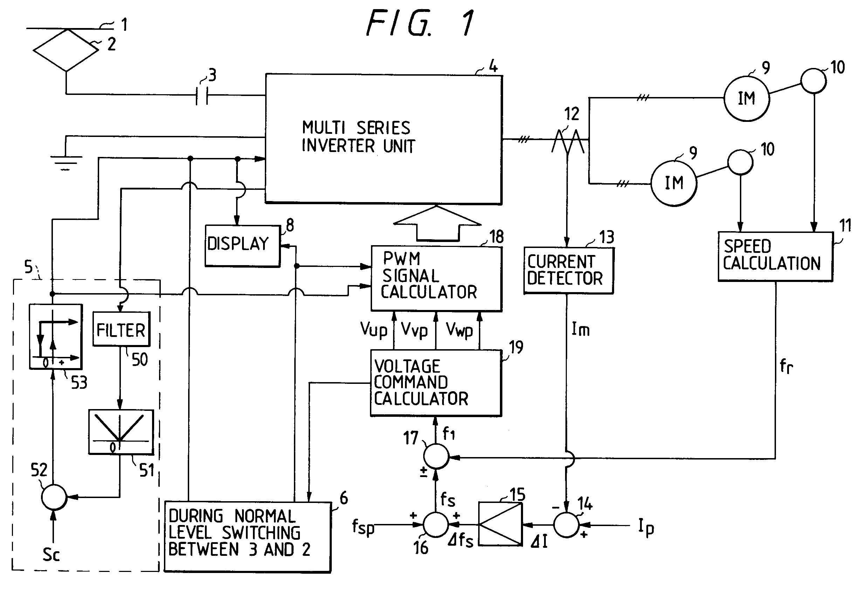

Fig.1 shows the first embodiment of the present invention which is applied to an electric rolling stock.

A DC current is received from an overhead line 1 at a pantograph collector 2 and is inputted to a multi series inverter unit 4 via a circuit breaker system 3. The multi series inverter unit 4 inverts the DC voltage into an AC voltage having three AC phase voltage levels of positive, zero and negative and feeds a three phase AC current to an induction moter (a synchronous moter is also used) 9. The revolution number of the induction motor 9 is detected via a pulse generator 10 and the rotor frequency (hereinbelow simply called as moter revolution number) fr is outputted from a speed calculator 11. Further, a motor current Im detected by a current detecting arrangement 12 and 13 is inputted to an adder 14 and is compared with a current command Ip. The output $\triangle$ I from the adder 14 is inputted to an amplifier 15 from which a slip frequency correction command $\triangle$ fs is outputted. The value $\triangle$ fs and a slip frequency command fsp are added at an adder 16 to output a slip frequency fs therefrom. The slip frequency fs and the motor revolution number fr are added (during a regenerative operation, subtracted) at an adder 17 to output an inverter frequency f1 which is inputted to a voltage command calculator 19. The voltage command calculator 19 outputs voltage commands Vup, Vvp and Vwp in proportion to the inverter frequency f1 displaced by a phase difference of 120° each other. A PWM signal calculator 18 outputs PWM signals for a multi series inverter unit per. se. known to the multi series inverter unit 4 to control turn on and turn off of the switching elements (such as thyristor, GTO, transistor and insulated gate bipolar transistor (IGBT)) constituting the multi series inverter unit 4.

Now, a unit 5 which switches from three output phase voltage levels to two output phase voltage levels during a failure is explained.

Current detection signals or voltage detection signals of the multi series inverter unit 4 is inputted into a filter circuit 50 which detects the main components thereof and outputs the same to an absolute value circuit 51. The absolute value circuit 51 outputs the absolute value of the output signal from the filter circuit 50 to an adder 52. The adder 52 outputs a deviation between the output signal from the absolute value circuit 51 and a reference value Sc to a judgement unit 53. The judgement unit 53 outputs a switching signal for switching the output voltage of the multi series inverter unit 4 to the three level output phase voltage of positive, zero and negative levels, or to the two level output phase voltage of positive and negative levels. The switching signal is inputted into the PWM signal calculator 18 to compensate voltage fluctuation due to the phase voltage level switching which will be explained later. Further, a display unit 8 receives the output from the judgement unit 53 and displays at a control desk of the electric rolling stock whether the current operation mode of the inverter unit is at three levels or at two levels. This indication is for preventing the driver from continuing the operation without noting the failure in the inverter unit when the switching from the three level mode to the two level mode is due to erroneous firing of a switching element. It is kind for the driver to distinguish the manner of display of the normal two level mode operation and the failure two level mode operation such as by a red lamp during the failure two level mode operation and by a green lamp during the normal two level mode operation. Further, the primary object of the display is to note the driver of the failure two level mode operation so that such can be carried out by making use of an alarm unit.

A phase voltage level switching unit 6 between three levels and two levels during a normal operation is inputted of an output voltage command value (instead of which the modulation rate can be used) for the inverter unit and judges the switching timing which will be explained later. When the operation of the inverter nuit is switched from the three level mode to the two level mode according to the judgement result, the switching signal is outputted to the multi series inverter unit 4, the display unit 8 and the PWM signal calculator 18 thereby to complete the switching operation.

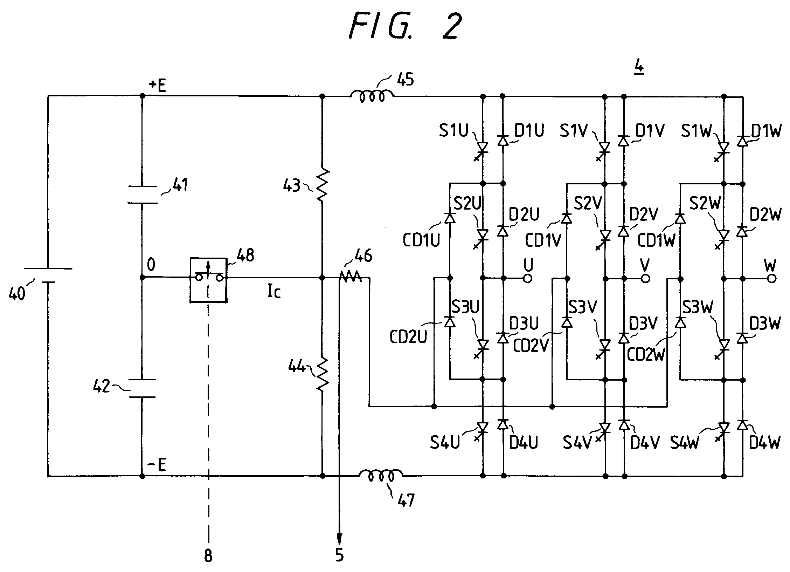

Now, the operation of the inverter arrangement is explained with reference to Fig.2, Fig.3, Fig.4 and Table 1.

Fig.2 shows details of a main circuit constitution of the multi series inverter unit 4.

The series connection of smoothing capacitors 41 and 42 is connected in parallel with a DC power source. The mutual connection point of the two smoothing capacitors 41 and 42 is used as a neutral point of the power source.

The switching circuit is composed of gate turn off thyristors (hereinbelow abbreviated as GTO) S1U~S4W and clamping diodes CD1U~CD2W which clamp the respective output termainals U, V, and W at the neutral potential.

The switching elements S1U~S4W which constitute the multi series inverter unit 4 are turned on and off by on and off pulse signals which are formed by comparing the three phase AC voltage commands Vup, Vvp and Vwp with a carrier wave signal. Under an ordinary three level mode operation the respective sets of the switching elements S1 and S3 and the switching elements S2 and S4 are operated to be turned on and turned off as one set of inverter units (with regard to the combination of the switching element groups S1 and S3, when the one group is turned on the other is turned off and such is called as a conjugated relation, the same conjugated relationship is applied for the combination of the switching element groups S2 and S4). As a result, the relationship between the turn on condition and the voltage at the output terminals stands as indicated in Table 1.

Table 1

|  | S1 on | S3 on |
|---|---|---|
| S2 on | + E | O |
| S4 on | inhibited | - E |

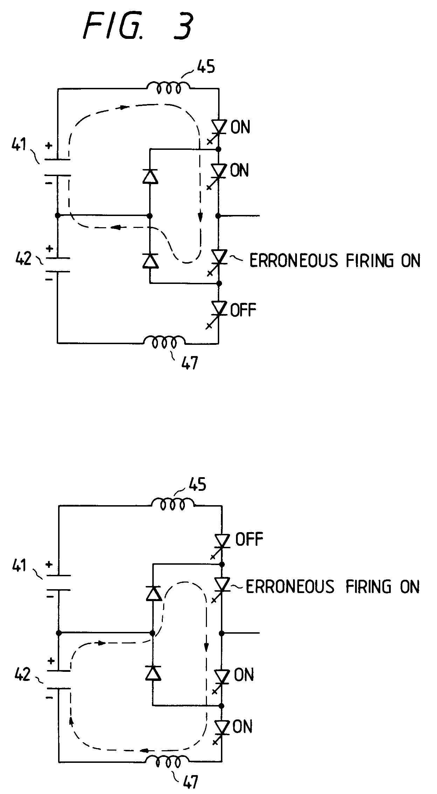

For example, now considering the U phase, when the switching elements S1U and S2U are turned on, a potential of + E appears at the output terminal U. Contrary, when the switching elements S3U and S4U are turned on, a potential of -E appears at the output terminal U. Further, when the switching elements S2U and S3U are turned on, the output terminal U is connected to the junction point of the smoothing capacitors 41 and 42 via the switching elements S2U and S3U and the clamping diodes CD1U and CD2U and the potential of zero appears at the output terminal (in case of the series connected four switching elements the zero potential appears at the output terminal, however when the number of series connected switching elements is increased one of equally divided plural potentials between + E and -E appears at the output terminal). As a result of the above operation, the output potential at the output terminal U varies between + E, O and -E so that higher harmonic components contained in the inverter output are reduced. However, during the period when the potential at the output terminal U is at + E or -E the switching element S2U or S3U is erroneously fired by a noise around the inverter unit as illustrated in Fig.3, a short-circuiting of the smoothing capacitor 41 or 42 may be caused. The same problem arises with regard to the output terminals V and W. The present inventors noted that the short-circuiting current through the smoothing capacitor 41 or 42 passes through the neutral point as illustrated by the broken lines in Fig.3 when the switching element S2U or S3U is erroneously fired, the present invention provides an interrupting circuit 48 as shown in Fig.2

5

so as to interrupt the neutral point current.

Hereinbelow, the principle of the present invention is explained.

Fig.3 shows the overcurrent flow route when a switching element in one phase is erroneously fired during the period when the potential at the output terminal of the phase is at +E or -E. The current due to the erroneous firing contains a large amount of DC component and flows into the neutral point via the diode connecting the switching element with the neutral point of the DC circuit. The overcurrent flowing into the neutral point as illustrated by the broken lines is close to a DC current of which magnitude is limited by reactors 45 and 47. On the other hand, when the inverter arrangement is operated in a normal condition, the current flowing through the neutral point is close to an AC current ( containing a small amount of DC component) having a frequency three times lager than the output frequency from the inverter unit and a magnitude proportional to the output current thereof. Accordingly, in the present invention the neutral point current is detected with a current detector 46 (the current magnitude at the neutral point or the current magnitude at the smoothing capacitors is detected), the erroneous firing is detected depending on the magnitude of the DC component and the interrupting circuit 48 as shown in Fig.2 is actuated to open the connection between the switching element and the neutral point of the DC circuit.

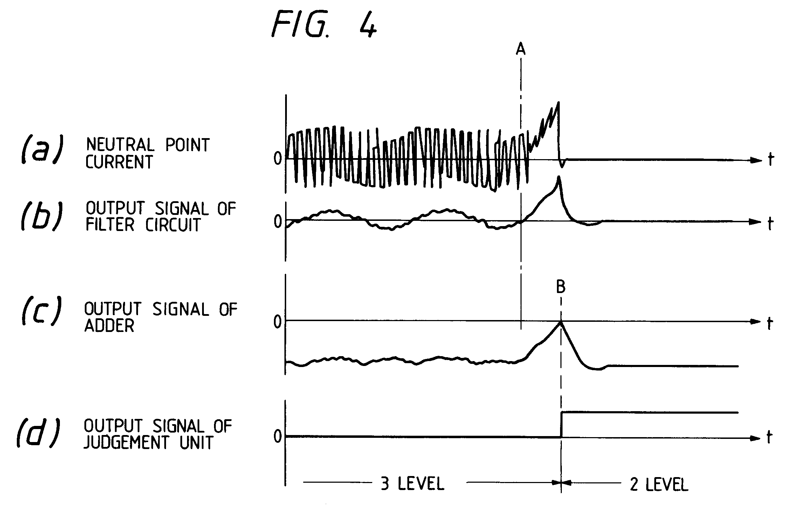

Fig.4 shows waveforms in the inverter arrangement according to the present invention. Fig.4 (a) shows a neutral point current, Fig.4 (b) shows an output signal from the filter circuit 50, Fig.4 (c) shows an output signal from the adder 52 and Fig.4 (d) shows an output signal from the judgement unit 53. The waveforms show that an erroneous firing has happened at the moment A and the interrupting circuit 48 is actuated at the moment B when it is detected that the level of the output signal from the filter circuit 50 has exceeded a reference value. As a result, the output level of the multi series inverter unit 4 is switched from the mode of three level output phase voltages of positive, zero and negative levels to the mode of two level output phase voltages of positive and negative levels, thereby the overcurrent due to erroneous firing is prevented.

Further, resistors 43 and 44 as shown in Fig.2 function to equalize the voltage division between the smoothing capacitors 41 and 42 during a normal operation.

Further, as will be apparent from the overcurrent flow routes shown in Fig.3, the interrupting circuit 48 may be actuated based upon a current deviation of two current detectors which may be provided respectively at the power source side of the smoothing capacitors 43 and 44 or based upon a voltage deviation of two voltage detectors which may be provided respectively at the smoothing capacitors 43 and 44 instead of the above two current detectors.

In the present embodiment, the output of the during failure phase voltage level switching unit 5 from three levels to two levels is inputted both to the multi series inverter unit 4 and the PWM signal calculator 18, however, the switching from the three level mode to the two level mode can be achieved only by inputting the output to the multi series inverter nuit 4 and by interrupting the neutral point current inside the multi series inverter unit 4, although a problem remains that the output voltage of the multi series inverter unit 4 does not follow the voltage command from the PWM signal calculator 18.

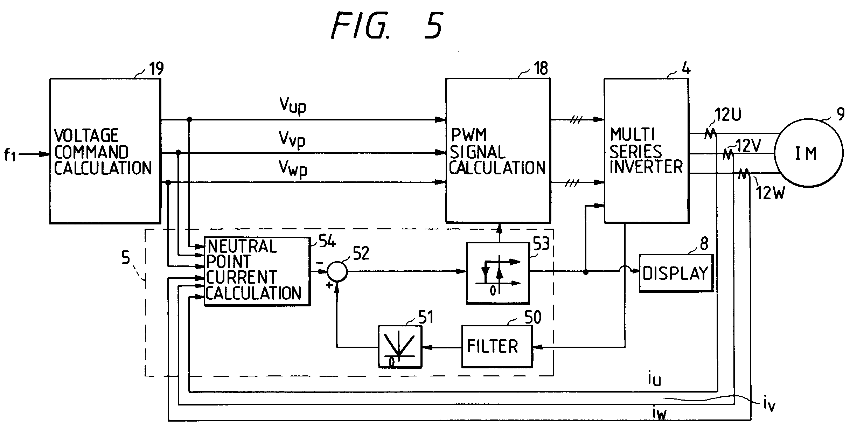

Fig.5 shows another embodiment of the during failure phase voltage level switching unit 5 from three levels to two levels.

Different from the during failure phase voltage level switching unit 5 from three levels to two levels as shown in Fig.1, in the present embodiment a neutral point current calculating circuit 54 is provided and the output signal from the neutral point current calculating circuit 54 is fed to the adder 52.

The neutral point current calculating circuit 54 calculates a neutral point current during a normal operation based on detection signals from current detectors 12U~ 12W of the inverter output currents iu, iv and iw and the output voltage commands Vup, Vvp and Vwp. The adder 52 outputs to the judgement unit 53 a deviation between the detected values of the neutral point current and the calculated value of the neutral point current during the normal operation.

Namely, the present embodiment notes the fact that the overcurrent during an erroneous firing flows inside the multi series inverter unit 4 and never directly reflects on the output current and is constituted to detect the erroneous firing based on the deviation between the detected values of the neutral point current and the calculated neutral point current from the inverter output current.

The netral point current Ic during a normal operation is in proportion to the product of the output current for every phase and the interval when the potential of the output terminal is zero. The intervals Ru, Rv and Rw when the potential of the output terminal is zero are expressed as follows in connection with the output voltage commands Vup, Vvp and Vwp of the respective phases.

$$Ru = 1-|Vup|/E \qquad (1)$$

$$Rv = 1-|Vvp|/E \qquad (2)$$

Rw = 1-|Vwp|/E    (3)

Wherein, E is a power source voltage.

Further, the neutral point current Ic obtained by composing the three phase components is expressed as follows in connection with the output currents iu, iv and iw.

Ic = Ru * iu + Rv * + Rw * iw    (4)

According to the present embodiment, no elimination with the filter circuit 50 of the ripple components having a frequency of three times of the inverter output frequency which is contained in the detetion signal of neutral point current are needed because the same ripple components as the detection signal are contained in the calculation result according to the equation (4), so that the time constant of the filter circuit 50 can be lowered to reduce the detection delay and the erroneous firing can be detected much earlier.

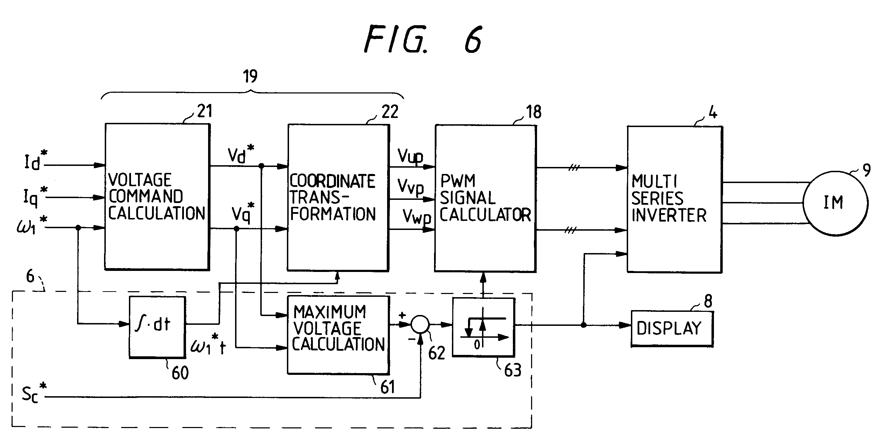

Fig.6 shows an embodiment of the during normal phase voltage level switching unit 6 from three levels to two level.

The present embodiment notes a fact that the output rate of the phase voltage of +E or -E increases and the output rate of the phase voltage of zero decreases depending on the increase of the magnitude of the output voltage from the multi series inverter unit, and is constituted to operate the multi series inverter nuit in the two level inverter when the magnitude of the output voltage increases.

A voltage command calculator 21 calculates voltage commands Vd* and Vq* expressed in rotating field coordinate system based on a field current command Id*, torque current command Iq* and primary angular frequency command ω 1* expressed in rotating field coordinate system, and outputs the result of the calculation to a coordinate transformation unit 22 and a maximum voltage calculator 61. An integrator 60 calculates a coordinate transformation reference command ω 1*t based on the primary angular frequecy command ω 1* and outputs the calculation result to the coordinate transformation unit 22. The coordinate transformation unit 22 transforms the voltage commands Vd* and Vq* into the three phase AC voltage commands Vup, Vvp and Vwp expressed in stator coordinate system based on the coordinate transformation reference command ω 1*t and outputs the transformation result to the PWM signal calculator 18. The maximum voltage calculator 61 calculates the maximum value of the inverter output voltage based on the voltage commands Vd* and Vq* and outputs the calculation result to an adder 62. The adder 62 outputs a deviation between the maximum value of the inverter output voltage and a reference value Sc* to a judgement unit 63.

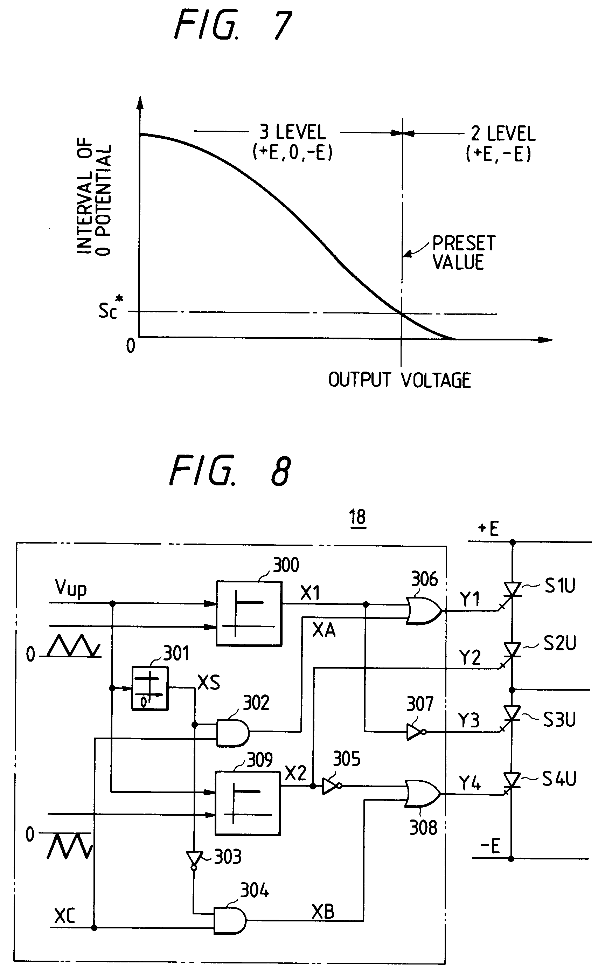

Now, the operation of the above is explained with refernce to Fig.7.

Fig.7 is a characteristic diagram showing a relationship between the inverter output voltage and the interval when the phase voltage of zero potential level is outputted.

In the present embodiment, the interrupting circuit 48 is actuated in a range (below Sc*) in which the interval when the phase voltage of zero potential level is outputted is short and the multi series inverter unit 4 is operated in the two level inverter and at the same time the switching signal is also inputted to the PWM signal calculator 18 to suppress a voltage fluctuation associated with the switching from the three level mode to the two level mode.

In the embodiment shown in Fig.1, the voltage fluctuation associated with the switching from the three level mode to the two level mode is suppressed with the PWM signal calculator 18 by correcting the magnitude of the output voltage command, however, the suppression of such voltage fluctuation can also be achieved through an adjustment of a V/F value or an output current command.

With the above explained constitution, a problem, for example, encountered during the three level operation mode under one pulse mode region (under Constant Voltage Variable Frequency (C V V F) region) are solved.

Namely, the one pulse mode region is basically a region where the entire voltage of the DC voltage is outputted, however, there is a prerequisite in the three level inverter with regard to the manner of the output voltage transition from +E to -E (vice versa) that the mode having zero potential has to be passed through.

Accordingly, when the inverter unit operating under the three level mode moves into one pulse mode region, the pulse portion corresponding to zero potential output as the line voltage is cut away.

In the present embodiment, the moment when the inverter unit moves into such region is detected (in the above one pulse mode is in particular exemplified but the pulse mode is not limited thereto) the operation mode thereof is switched into the two level mode, thereby the above problem is overcome.

Further, in an operating range of a higher output voltage, via the switching to the two level operation mode, the switching logic is simplified in comparison with that during the three level operation mode, thereby an inverter arrangement which hardly generates an eroneous firing of the switching elements is provided.

The present embodiment was explained based on the principle of vector control of a motor, however if the output voltage command can be calculated by any means the manner of control is not necessarily based on the principle of vector control of a motor.

Fig.8 is details of a circuit constitution diagram of the PWM signal calculator 18 according to the present invention.

In the present embodiment, only the operation with regard to U phase is explained with reference to the drawing, however the constitution and operation of V and W phases are the same as those of the U phase. A comparator 300 compares the voltage command Vup only with the positive side of a carrier wave signal and feeds a pulse width modulation signal X1 to a NOT circuit 307 and an OR circuit 306. A comparator 309 compares the voltage command Vup only with the negative side of the carrier wave signal and feeds a pulse width modulation signal X2 to a NOT circuit 305 and the switching element S2U. A polarity judgement unit 301 outputs XS = 0 when the voltage command Vup is a positive polarity and XS = 1 when a negative polarity to an AND circuit 302 and a NOT circuit 303. The output of the NOT circuit 303 is fed to an AND circuit 304. The switching signal XC between three levels and two levels is fed to the AND circuit 302 and the AND circuit 304. The output signal XA of the AND circuit 302 is applied to the OR circuit 306 and the output signal Y1 of the OR circuit 306 is applied to the switching element S1U. The output signal Y3 of the NOT circuit 307 is applied to the switching element S3U. The output signal XB of the AND circuit 304 and the output signal of the NOT circuit 305 are applied to an OR circuit 308 and the output signal Y4 of the OR circuit 308 is applied to the switching element S4U.

The Table 2 shows a relationship of the output signals XA and XB of the AND circuit 302 and the AND circuit 304 with respect to the output signal XS of the polarity judgement unit 301 and the switching signal XC.

## Table 2

| X S | X C | | X A | X B |
|---|---|---|---|---|
| 0 | 0 | | 0 | 0 |
| 0 | 1 | | 0 | 1 |
| 1 | 0 | | 0 | 0 |
| 1 | 1 | | 1 | 0 |

$$XA = XS \cdot XC \qquad XB = \overline{XS} \cdot XC$$

The output signals XA and XB are signals which command an output voltage of +E or -E depending on the polarity of the output voltage command signal when the multi series inverter unit operating in the three level mode is switched to the two level mode operation during the period when the output voltage thereof is at zero potential. Table 3 shows a relationship of the on and off conditions of the switching elements under the three level operation and under the two level operation with regard to the pulse width modulation signal X1 and X2 and the output signals XA and XB of the AND circuit 302 and the circuit 304.

EP 0 512 531 A2

## Table 3

| X1 | X2 | XA | XB | | Y1 | Y2 | Y3 | Y4 | | output voltage | | note |
|----|----|----|----|--|----|----|----|----|--|----------------|--|------|
| 0 | 0 | 0 | 0 | | 0 | 0 | 1 | 1 | | −E | | :3 levels |
| 0 | 0 | 1 | 0 | | 1 | 0 | 1 | 1 | | (−E) | | |
| 0 | 1 | 0 | 0 | | 0 | 1 | 1 | 0 | | 0 | | :3 levels |
| 0 | 1 | 0 | 1 | | 0 | 1 | 1 | 1 | | (−E) | | |
| 0 | 1 | 1 | 0 | | 1 | 1 | 1 | 0 | | (+E) | | |
| 1 | 1 | 0 | 0 | | 1 | 1 | 0 | 0 | | +E | | :3 levels |
| 1 | 1 | 0 | 1 | | 1 | 1 | 0 | 1 | | (+E) | | |

$$Y1 = X1+XA \qquad\qquad Y3 = \overline{X1} \qquad\qquad 1 : ON$$

$$Y2 = X2 \qquad\qquad Y4 = \overline{X2}+XB \qquad\qquad 0 : OFF$$

When the output signals XA and XB of the AND circuit 302 and the AND circuit 304 are zero, the multi series inverter unit operates in the three level mode, however, when one of the output signals XA and XB is rendered to one, the operation mode of the inverter unit changes to the two level mode.

According to the present embodiment, an advantage is obtained, in that in the course of switching of the PWM modulation signals from the three level mode to the two level mode or vice versa, PWM signals suitable for the respective operating modes are provided to the switching elements, in that correct PWM signals in response to the polarity of the output voltage command signals are provided.

However, in the above embodiment, the switching elements S2U and S3U may be simultaneously fired during the two level mode, thereby problems such as an over voltage on the turned off switching element arise even if the neutral current is interrupted, in that a voltage of 2E is applied on the interrupted switching element S1U or S4U.

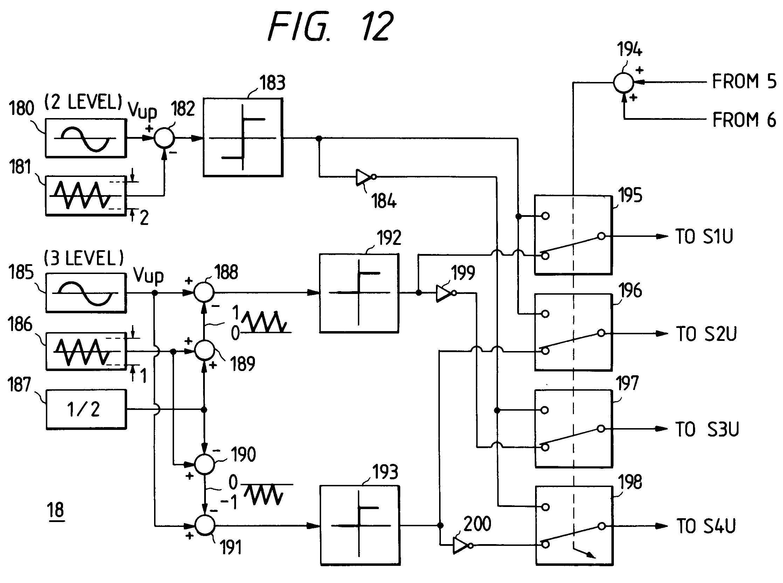

Fig.12 shows an embodiment incorporating a countermeasure for the above problems.

Fig.12 shows a circuit diagram of another embodiment of the PWM signal calculating unit 18 which overcomes the above problems. The circuit diagram only shows that for one phase, in that U phase, however the circuit diagrams of the other phases in that V and W phases are substantially the same as that in U phase, the illustration and explanation thereof are omitted. Same output voltage command signals for U phase 180 and 185 are respectively inputted to the adders 182, 188 and 191. The adder 182 adds the output command signal 180 for U phase and a carrier wave signal 181 and outputs the result to a comparator 183. The output signal of PWM pulse for two level operation mode from the compatator 183 is inputted to operation mode switching units 195 and 196, and a NOT circuit 184. The output signal from the NOT circuit 184 is outputted to operation mode switching units 197 and 198. An adder 189 adds a carrier wave signal 186 and a bias signal 187 and outputs the result to the adder 188. An adder 190 adds the carrier wave signal 186 and the bias signal 187 and outputs the result to the adder 191. The adder 188 adds the output from the adder 189 and the output voltage command signal for U phase 185 and outputs the result to a comparator 192. The output signal of PWM pulse for three level operation mode from the comparator 193 is inputted to the operation mode switching unit 195 and a NOT circuit 199. The output signal from the NOT circuit 199 is inputted to the operation mode switching unit 197. The adder 191 adds the output from the adder 190 and the output voltage command signal for U phase 185 and inputs the result

9

to a comparator 193. The output signal of PWM pulse for three level operation mode from the comparator 193 is inputted to the operation mode switching unit 196 and a NOT circuit 200. The output signal of the NOT circuit 200 is inputted to the operation mode switching unit 198. An adder 194 adds the output signals from the during failure operation mode switching unit 5 between 3 and 2 levels and the during normal operation mode switching unit 6 between 3 and 2 levels and outputs the result to the operation mode switching units 195~ 189. The operation mode switching units 195 ~ 198 switch between the output signal from the comparator 183 and the output signals from the comparators 192 and 193 in response to the output signal from the adder 194 and output respective gate circuit signals for the switching elements.

In the present embodiment, during the two level mode operation a set composed of the switching elements S1U and S2U and a set composed of the switching elements S3U and S4U are constituted to operated in a conjugated manner (in that except for a short-circuiting failure, the switching elements S2U and S3U are never fired simultaneously).

During the three level mode, the positive side of the voltage command Vup and a triangular wave are compared at a comparator 188 and the negative side of the voltage command Vup and the triangular wave are compared at a comparator 191. Based on the result of the comparison, gate signals are applied to the switching elements SU1 ~ SU4 so that the set of the switching elements S1U and S3U and the set of the switching elements S2U and S4U are operated in a conjugated manner each other.

During the two level mode operation per.se. known, a sinusoidal wave and a triangular wave are compared and based on the comparison result, gate signals are applied to the switching elements S1U~ S4U so that the set of the switching elements S1U and S2U and the set of the switching elements S3U and S4U are operated in a conjugated manner each other.

Mode switching units 195 through 198 are switched to two level side by a signal from the during failure level switching unit 5 from three level mode to two level mode or the during normal level switching unit 6 from three level mode to two level mode.

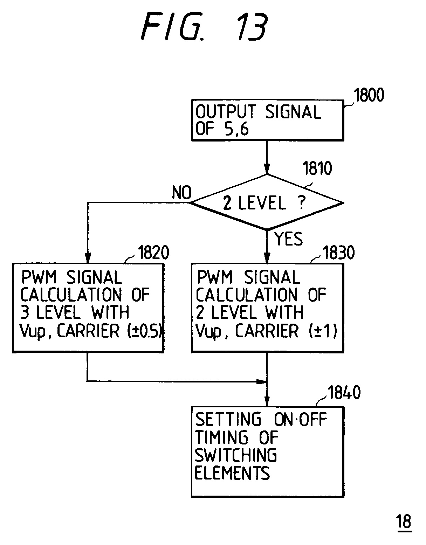

Fig.13 shows the flow chart of the above switching process.

In the present embodiment, steps 1820 and 1830 operate in parallel and one of them is selected for the switching.

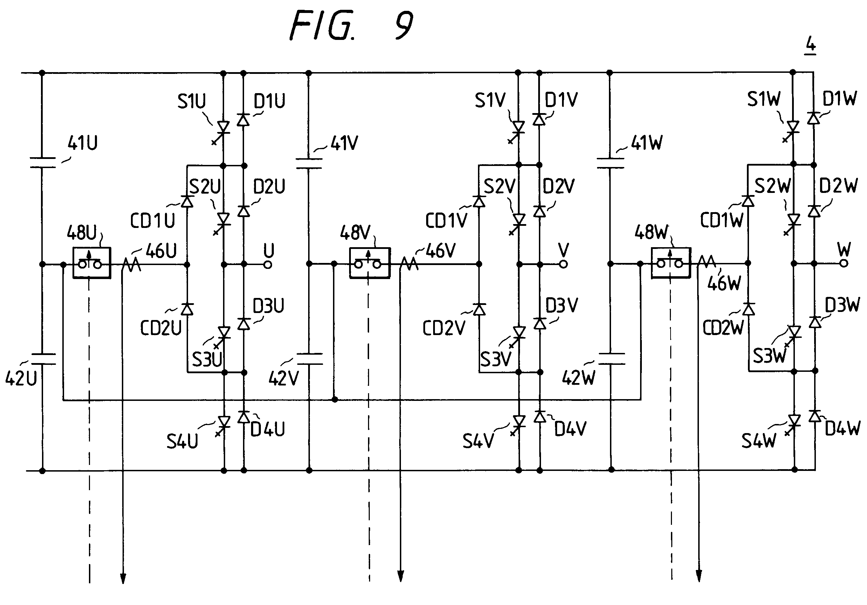

Fig.9 shows another embodiment of the main circuit diagram according to the present invention.

Different points of the present embodiment from the main circuit constitution shown in Fig.2 are that smoothing capacitors 41U~ 42W, interrupting circuit 48U ~ 48W and current dectectors 46U~ 46W are provided for the respective phases to thereby enable the switching from the three level mode to the two level mode for every phase. According to the present embodiment, only the phase at which an erroneous firing is generated due to noine is temporarily switched (48U ~ 48W), and after the erroneous firing due to noise disappears the switched phase is restored to the initial condition, such that the inverter continues the operation even if an erroneous firing due to noise is generated.

In the above embodiments, applications of the present invention to the multi series inverter unit which is controlled based on the PWM signals are explained, however, the present invention is also applicable to the multi series inverter unit which is controlled by the pulse width control based on space vector with substantially the same advantage.

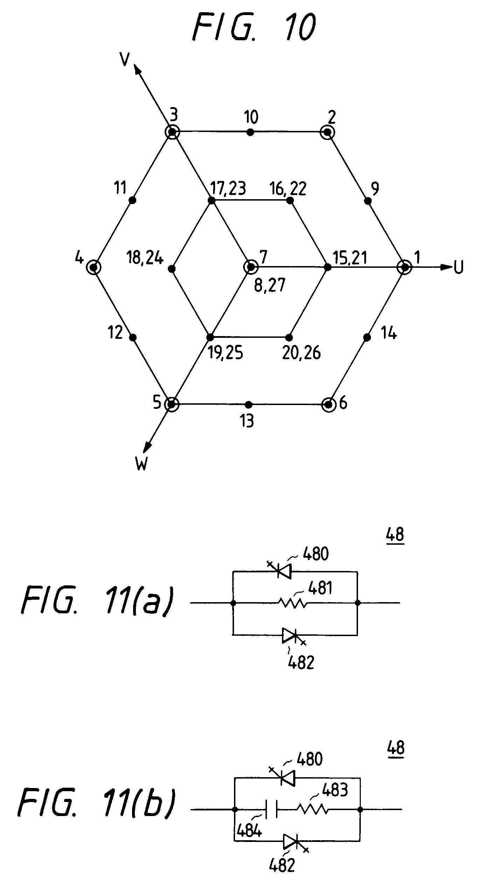

Fig.10 shows a space vector diagram representing output voltages of the multi series inverter unit. In the drawing, Nos.1~ 8 represent the output voltage vectors of the inverter unit operating under two level mode and Nos.9~ 27 represent the output voltage vectors of the inverter unit specific to the three level operation. Table 4 shows a relationship between the output terminal potentials of the respective phases and the line voltages.

Table 4

| No | U phase | V phase | W phase | Vu-Vv | Vv-Vw | Vw-Vu |
|----|---------|---------|---------|-------|-------|-------|
| 1 | E | - E | - E | 2E | 0 | - 2E |
| 2 | E | E | - E | 0 | 2E | - 2E |
| 3 | - E | E | - E | - 2E | 2E | 0 |
| 4 | - E | E | E | - 2E | 0 | 2E |
| 5 | - E | - E | E | 0 | - 2E | 2E |
| 6 | E | - E | E | 2E | - 2E | 0 |
| 7 | E | E | E | 0 | 0 | 0 |
| 8 | - E | - E | - E | 0 | 0 | 0 |
| 9 | E | 0 | - E | E | E | - 2E |
| 10 | 0 | E | - E | - E | 2E | - E |
| 11 | - E | E | 0 | - 2E | E | E |
| 12 | - E | 0 | E | - E | - E | 2E |
| 13 | 0 | - E | E | E | - 2E | E |
| 14 | E | - E | 0 | 2E | - E | - E |
| 15 | E | 0 | 0 | E | 0 | - E |
| 16 | E | E | 0 | 0 | E | - E |
| 17 | 0 | E | 0 | - E | E | 0 |
| 18 | 0 | E | E | - E | 0 | E |
| 19 | 0 | 0 | E | 0 | - E | E |
| 20 | E | 0 | E | E | - E | 0 |
| 21 | 0 | - E | - E | E | 0 | - E |
| 22 | 0 | 0 | - E | 0 | E | - E |
| 23 | - E | 0 | - E | - E | E | 0 |
| 24 | - E | 0 | 0 | - E | 0 | E |
| 25 | - E | - E | 0 | 0 | - E | E |
| 26 | 0 | - E | 0 | E | - E | 0 |
| 27 | 0 | 0 | 0 | 0 | 0 | 0 |

In the pulse width control based on space vector, one of 27 voltage vectors determined by switching combination of the respective phases as shown in Table 4 is selected based on an inverter output voltage command and the switching of the switching elements in the respective phases are determined, and further, when an erroneous firing due to noise is generated the selection of the output voltage vectors of Nos.9 ~ 27 which are specific to the three level operation is inhibited, thereby the same advantages as obtained with respect to the application of the present invention to the multi series inverter unit which is controlled based on the PWM signals are also obtained with the present embodiment.

Fig.11 (a) shows a neutral current interrupting circuit according to the present invention which is constituted by switching elements 480 and 482 (for example, GTO) connected in inverted parallel and a resistor 481 serves to suppress an overcurrent. Fig.11 (b) also shows a neutral current interrupting circuit according to the present invention which is constituted by the switching elements 480 and 482 (for example, GTO) connected in inverted parallel and a capacitor 484 and a resistor 483 are for suppressing an overcurrent.

11

In the present embodiment, although semiconductor interrupters are used for the interrupting circuit, a vacuum interrupter can be used in place of the semiconductor interrupter.

Further, when the operation of the inverter unit is shifted from the three level mode to the two level mode because of such as erroneous firing of the switching elements, the two level mode operation of the inverter unit has surely to be continued during such as a power running and a regenerative running of the electric rolling stock, further even if the electric rolling stock is in a coasting running by notching off or in a standstill, switching to the three level thereafter should be prevented.

Further, in the above embodiments, the application of the present invention to the electric rolling stock is exemplified, however the application of the present invention is not necessarily limited thereto and the present invention is applicable to any loads driven by a multi series inverter unit such as a rolling mill and a pump.

Further, the DC power source for the inverter unit is not limited to that shown in the previous embodiments, and a converter can be used therefor in the same way as in the previous embodiments.

An advantage according to the present invention is that by operating the multi series inverter unit in the two level mode during erroneous firing of the switching elements, the operation of the inverter can be continued. Further, according to the present invention, an inverter arrangment which eliminates an overcurrent caused by an erroneous firing, can be used under a severe noise environment and outputs an AC output having a small amount of higher harmonics. Still further, according to the present invention the operation mode of the inverter arrangement can be switched even during a normal operation from the three level mode to the two level mode to enhance the efficiency thereof.

Further, when the present invention is applied to an electric rolling stock, the current operating mode is displayed, the driver never overlooks the continuation of the two level mode operation of the inverter arrangement.

Further, according to the present invention, an operating region where the interval of zero level potential is decreasing is estimated by making use of the magnitude of the output voltage command signal and in the operating region where the interval of zero level potential in the output voltage is decreasing the multi series inverter unit is operated as the conventional PWM inverter unit by open-circuiting the connection between the switching elements in the multi series inverter unit and the neutral point of the DC circuit to switch the output voltage at two levels of positive and negative levels, thereby an inverter arrangement, which reduces the possibility of causing erroneous firing of the switching elements due to noise, eliminates an overcurrent due to the erroneous firing, can be used under a severe noise environment and outputs an AC output having a small amount of higher harmonics, is provided.

## Claims

1. An inverter arrangement which inverts a DC to an AC, comprising a first operating mode having an AC phase voltage of three levels, a second operating mode having an AC phase voltage of two levels and means (6) for switching between the first and second operating mode.

2. An inverter arrangement according to claim 1, further comprising means (8) for displaying the current mode of operation among the first and second operating modes.

3. An inverter arrangement according to claim 1, further comprising an inverter unit (4) inverting the DC into an AC, means (19) for commanding an output voltage of the inverter unit (4), means for comparing the commanded output voltage with a predetermined value and means for switching between the first and the second operating mode in response to the output from the comparing means.

4. An inverter arrangement which inverts a DC to an AC and has an operating mode in which an intermediate potential of the DC voltage is outputted as the AC phase voltage, comprising means for preventing the operating mode in which an intermediate potential of the DC voltage is outputted.

5. An inverter arrangement according to claim 4, further comprising means for displaying whether the operating mode is in operation or is prevented.

6. An inverter arrangement comprising a smoothing capacitor (41, 42) provided at a DC side, a series connection of a first through a fourth switching element (S1U - S4W) connected in parallel with the smoothing capacitor, the mutual junction of the first and second switching elements and the mutual junction of the third and fourth switching elements being connected to a neutral point of the smoothing capacitor via a diode (CD1U - CD2W) and the mutual junction of the second and third switching elements being connected to a load in an AC side, and means (18) for controlling turn on and turn off of the first and third switching elements and the second and fourth switching elements in a conjugated manner with each other.

7. An inverter arrangement according to claim 6, further comprising means (48) for interrupting a current flowing through the neutral point.

8. An inverter arrangement according to claim 6, further comprising means (18) for inhibiting simultaneous turning on of the second and third switching elements.

9. An inverter arrangement according to claim 6, further comprising means (18) for controlling turn on and turn off of the first and second switching element and the third and fourth switching elements in a conjugaged manner with each other.

10. An inverter arrangement according to claim 6, further comprising means (46) for detecting a current flowing through the neutral point, means (5) for comparing the output from the detecting means (46) with a predetermined value and means (48) for interrupting the current flowing through the neutral point in response to the output from the comparing means (46).

11. An inverter arrangement according to claim 6, further comprising means (54) for calculating a current flowing through the neutral point, means (46) for detecting a current flowing through the neutral point, means (52, 53) for comparing the output from the detecting means (46) with the output from the calculating means (54) and means (48) for interrupting the current flowing through the neutral point in response to the output from the comparing means (52, 53).

12. An inverter arrangement according to claim 6, further comprising means (48) for interrupting a current flowing through the neutral point and means (8) for displaying the operating condition of the interrupting means.

13. An inverter arrangement according to claim 6, further comprising means for inhibiting simultaneous turning on of the second and third switching elements and means (8) for displaying the operating condition of the inhibiting means.

14. An inverter arrangement according to claim 6, further comprising means for controlling turn on and turn off of the first and second switching elements and the third and fourth switching elements in a conjugated manner each other and means for displaying which of the first and third switching elements and the second and fourth switching elements, and the first and second switching elements and the third and fourth switching elements is in a condition of being controlled of their turn on and turn off in a conjugated manner each other.

15. An AC motor driving system which includes an inverter unit inverting a DC to an AC and an AC motor driven by the inverter unit, comprising a first operating mode having an AC phase voltage of three levels and a second operating mode having an AC phase voltage of two levels outputted to the AC motor, means for switching between the first and second operating modes each other and means for displaying the current mode in operation among the first and second operating modes.

16. An AC motor driving system which includes an inverter unit inverting a DC to an AC and has an operating mode in which an intermediate potential of the DC voltage is outputted as the AC phase voltage and an AC motor driven by the inverter unit, comprising means for preventing the operating mode in which an intermediate potential of the DC voltage is outputted and means for displaying whether the operating mode is in operation driving the AC motor or is prevented.

17. A motor driving system comprising an inverter unit having a smoothing capacitor (41, 42) provided at a DC side and a series connection of a first through a fourth switching elements (S1U - S4W) connected in parallel with the smoooothing capacitor, the mutual junction of the first and second switching elements and the mutual junction of the third and fourth switching elements being connected to a neutral point of the smoothing capacitor via a diode (CD1U - CD2W) and the mutual junction of the second and third switching elements being connected to a load in an AC side, means (18) for controlling turn on and turn off of the first and third switching elements and the second and fourth switching elements in a conjugated manner with each other and an AC motor (9) connected to the AC side of the inverter unit and being driven thereby, further comprising means (48) for interrupting a current flowing through the neutral point and means (8) for displaying the operating condition of the interrupting means.

18. An AC motor driving system comprising an inverter unit having a smoothing capacitor (41, 42) provided at a DC side and a series connection of a first through a fourth switching elements (S1U - S4W) connected in parallel with the smoothing capacitor, the mutual junction of the first and second switching elements and the mutual junction of the third and fourth switching elements being connected to a neutral point of the smoothing capacitor via a diode (CD1U - CD2W) and the mutual junction of the second and third switching elements being connected to a load in an AC side, means (18) for controlling turn on and turn off of the first and third switching elements and the second and fourth switching elements in a conjugated manner with each other and an AC motor (9) connected to the AC side of the inverter unit as the load and being driven thereby, further comprising means for inhibiting simultaneous turning on of the second and third switching elements and means (8) for displaying the operating condition of the inhibiting means.

19. A pulse width modulation arrangement comprising a series connection of a first through a fourth switching elements and means for controlling turn on and turn off of the first and third switching elements and the second and fourth switching elements in a conjugated manner each other, further comprising means for inhibiting simultaneous turning on of the second and third switching elements.

FIG. 1

# FIG. 2

EP 0 512 531 A2

# FIG. 3

# FIG. 4

(a) NEUTRAL POINT CURRENT

(b) OUTPUT SIGNAL OF FILTER CIRCUIT

(c) OUTPUT SIGNAL OF ADDER

(d) OUTPUT SIGNAL OF JUDGEMENT UNIT

3 LEVEL          2 LEVEL

EP 0 512 531 A2

FIG. 5

FIG. 6

$I_d{}^*$

$I_q{}^*$

$\omega_1{}^*$

VOLTAGE
COMMAND
CALCULATION — 21

$V_d{}^*$

$V_q{}^*$

COORDINATE
TRANS-
FORMATION — 22

$V_{up}$

$V_{vp}$

$V_{wp}$

PWM
SIGNAL
CALCULATOR — 18

MULTI
SERIES
INVERTER — 4

IM — 9

19

6

$\int \cdot dt$ — 60

$\omega_1{}^* t$

MAXIMUM
VOLTAGE
CALCULATION — 61

+
−

62

63

0 1

DISPLAY — 8

$S_c{}^*$

# FIG. 7

# FIG. 8

21

FIG. 9

## FIG. 10

## FIG. 11(a)

## FIG. 11(b)

FIG. 12

# FIG. 13

```
                              ┌─────────────────┐ 1800
                              │ OUTPUT SIGNAL   │
                              │ OF 5,6          │
                              └─────────────────┘
                                      │
                                      ▼        1810
                          NO       ◇───────────◇
                     ┌─────────────│  2 LEVEL ? │
                     │             ◇───────────◇
                     │                    │
                     │                  YES
              ┌──────▼──────┐ 1820   ┌────▼────────┐ 1830
              │ PWM SIGNAL  │        │ PWM SIGNAL  │
              │ CALCULATION OF│      │ CALCULATION OF│
              │ 3 LEVEL WITH │       │ 2 LEVEL WITH │
              │ Vup, CARRIER (±0.5)│ │ Vup, CARRIER (±1)│
              └──────┬──────┘        └────┬────────┘
                     │                    │
                     └──────────┐    ┌────┘
                                │    │
                                ▼    ▼
                              ┌─────────────┐ 1840
                              │ SETTING ON·OFF│
                              │ TIMING OF    │
                              │ SWITCHING    │
                              │ ELEMENTS     │
                              └─────────────┘
```

18